## Europäisches Patentamt

## European Patent Office

## Office européen des brevets

(11) Veröffentlichungsnummer: **0 273 185**
**B1**

(12) **EUROPÄISCHE PATENTSCHRIFT**

(45) Veröffentlichungstag der Patentschrift:
31.10.90

(51) Int. Cl.⁵: **F16C 13/00**

(21) Anmeldenummer: 87117132.8

(22) Anmeldetag: 20.11.87

(54) Walze mit steuerbarem Liniendruck.

(30) Priorität: 29.11.86 DE 3640902
29.11.86 DE 3640903

(43) Veröffentlichungstag der Anmeldung:
06.07.88 Patentblatt 88/27

(45) Bekanntmachung des Hinweises auf die Patenterteilung:
31.10.90 Patentblatt 90/44

(84) Benannte Vertragsstaaten:
CH GB IT LI SE

(56) Entgegenhaltungen:
CH-A- 585 352
DE-A- 2 230 139
DE-C- 2 332 861
DE-C- 3 003 395

(73) Patentinhaber: Eduard Küsters Maschinenfabrik GmbH
& Co. KG, Gladbacher Strasse 457, D-4150 Krefeld 1(DE)

(72) Erfinder: Küsters, Karl-Heinz,
Hermann-Schumacher-Strasse 49,
D-4150 Krefeld-Forstwald(DE)

(74) Vertreter: Patentanwälte Dipl.-Ing. Walter Kuborn
Dipl.-Phys. Dr. Peter Palgen, Mulvanystrasse 2,
D-4000 Düsseldorf(DE)

ACTORUM AG

## Beschreibung

Die Erfindung bezieht sich auf eine Walze der dem Oberbegriff des Anspruchs 1 entsprechenden Art.

Eine solche Walze ist aus der DE-C 30 03 395 bekannt. Bei der bekannten Ausführungsform ist der zwischenraum zwischen Querhaupt und Innenumfang der Hohlwalze durch längs des Querhauptes zu beiden Seiten der Wirkebene der Walze zwischen Querhaupt und Innenumfang der Hohlwalze angeordnete Längsdichtungen, an denen die Hohlwalze mit ihrem Innenumfang vorbeigleitet, in eine auf der Seite des Walzspalts gelegene und eine auf der gegenüberliegenden Seite gelegene Längskammer unterteilt. Mindestens die auf der Seite des Walzspaltes gelegene Längskammer ist mit Druckflüssigkeit füllbar, wobei der gegen den Innenumfang der Hohlwalze wirkende Druck den Liniendruck im Walzspalt erzeugt. Die Zonen erniedrigten Drucks sind in dieser Längskammer gelegen und bilden Ungleichmäßigkeiten in dem ansonsten gleichmäßigen Druckkissen, durch welche dessen Druckausübung in bestimmter Weise modifiziert werden kann. Maßgebend ist hierbei das Vorhandensein einer durch die Längsdichtungen gebildeten Unterteilung, durch die die Längskammern abgeteilt werden, deren Druckunterschied den Liniendruck ergibt.

Der Erfindung liegt die Aufgabe zugrunde, eine dem Oberbegriff entsprechende Walze anzugeben, mit der andere Beeinflussungsmöglichkeiten des Liniendrucks gegeben sind, die sonst nur mit erheblich größerem Aufwand, wenn überhaupt, erzielbar sind.

Diese Aufgabe wird erfindungsgemäß durch das im Kennzeichen des Anspruchs 1 wiedergegebene Merkmal gelöst.

Während also bei der DE-C 30 03 395 in dem Zwischenraum zwischen Querhaupt und Innenumfang der Hohlwalze durch die Längsdichtungen eine auf der Seite des Walzspalts gelegene Längskammer abgeteilt ist, deren Druckflüssigkeit einen über die Länge der Walze gleichmäßigen Druck gegen den Innenumfang der Hohlwalze und damit einen entsprechenden Liniendruck erzeugt, wirkt bei der Erfindung die Druckflüssigkeit in dem Zwischenraum zwischen dem Querhaupt und dem Innenumfang der Walze nicht mehr einseitig gegen den Walzspalt, um den Liniendruck oder einen Anteil desselben zu erzeugen. Vielmehr übt die Druckflüssigkeit ihren Druck in alle Richtungen über den gesamten Umfang gleichmäßig aus, so daß ihre Kraftwirkung ohne zusätzliche Maßnahmen neutral wäre und die Hohlwalze mit Ausnahme der Erzeugung eines gleichmäßigen Innendrucks überhaupt nicht beeinflussen würde.

Bei der bevorzugten Ausführungsform der Erfindung wird der überall gleichmäßige Druck natürlich in der Weise erzeugt, daß überhaupt keine Längsdichtungen vorhanden sind. Dadurch entfällt der damit verbundene bauliche Aufwand und treten auch gewisse Leistungsverluste durch die Reibung an den Längsdichtungen nicht auf. Aber auch wenn eine Walze für bestimmte Betriebsarten Längsdichtungen aufweist, kann der überall gleiche Druck durch einen drosselfreien Verbindungskanal zwischen den durch die Längsdichtungen abgeteilten Längskammern künstlich geschaffen werden.

Die Wirkung der Erfindung beruht nun darauf, daß die durch die Dichtungsglieder abgeteilten Zonen erniedrigten Drucks in der allseitigen Druckausübung durch die Druckflüssigkeit eine Unsymmetrie schaffen, die dazu führt, daß resultierende Kräfte auf die Hohlwalze übrigbleiben, die sie zu verlagern trachten oder, wenn sie durch eine Gegenwalze abgestützt ist, zu einem Liniendruck in dem gebildeten Walzspalt führen.

Sind zum Beispiel die Zonen erniedrigten Drucks auf der dem Walzspalt gegenüberliegenden Seite angeordnet, so entsteht durch den Umstand, daß die Druckflüssigkeit ihren Druck in den bezüglich der Meridianebene spiegelbildlich gelegenen Zonen auf der Seite des Walzspalts ausübt, auf der gegenüberliegenden Seite aber nicht, eine gegen den Walzspalt gerichtete Kraft, die zu einer Liniendruckverteilung führt, die in besonderer Weise dadurch geprägt ist, daß die zu dem Liniendruck führenden Elemente auf der dem Walzspalt abgelegenen Seite liegen. Es werden dort "Löcher" bzw. "Leerstellen" in der ansonsten gleichmäßigen Druckverteilung erzeugt, denen auf der Seite des Walzspalts entsprechende Zonen des gleichmäßigen vollen Drucks gegenüberstehen, die sich wie gegen den Walzspalt gerichtete Druckstempel auswirken.

Sind die Zonen erniedrigten Drucks auf der Seite des Walzspalts gelegen, so ergibt sich durch den vollen Druck in den entsprechenden Zonen auf der gegenüberliegenden Seite eine resultierende Kraft, die die Hohlwalze vom Walzspalt wegzuziehen bestrebt ist. Dies kann sowohl zur Beeinflussung des Liniendruckverlaufs verwendet werden, wenn der Liniendruck insgesamt durch äußere Mittel, zum Beispiel Stützwalzen, die an der Hohlwalze angreifen, erzeugt wird. Die Kraft der Stützwalzen überlagert sich dann den durch die "Löcher" oder "Leerstellen" gegebenen resultierenden lokalen Kraftkomponenten. Die Anordnung kann aber auch zur Erzeugung eines sogenannten "inneren Hubs" dienen, durch den der Walzspalt gelüftet wird. Der innere Hub ist bei Walzen möglich, bei denen die Hohlwalze an den Enden nicht auf dem Querhaupt gelagert, sondern in der Wirkebene, d.h. in der die Achsen der Walze und der Gegenwalze verbindenden Ebene, gegenüber dem Querhaupt radial zu diesem insgesamt verlagerbar ist.

Das Grundprinzip der Erfindung beruht also darauf, in dem rundum mit Druckflüssigkeit gefüllten Zwischenraum "Löcher" erniedrigen Drucks zu erzeugen, um dadurch zu bestimmten Kraftwirkungen zu gelangen.

Die Variationsmöglichkeiten des erzeugten Liniendruckverlaufs können noch erheblich gesteigert werden, wenn die eine wichtige Erweiterung der Erfindung darstellende Ausgestaltung nach Anspruch 2 vorgesehen ist.

Der Grungedanke hierbei ist, daß ein und dieselbe Zone wahlweise einmal als "Loch" oder "Leerstelle" mit einem gegenüber der Umgebung niedrigeren Druck und andererseits auch als positives Druckglied mit einem gegenüber dem Druck der Umgebung erhöhten Druck betrieben werden kann, d.h. als "Unterdruckelement" bzw. als "Überdruckelement".

Dadurch erhöht sich natürlich die Variationsbreite der Möglichkeiten der Beeinflussung des Liniendrucks bedeutend.

Ein wesentlicher Gesichtspunkt hierbei ist, daß mit einer auf nur einer Seite des Querhaupts gelegenen, durch entsprechende Dichtungsglieder abgeteilten Zone sowohl der Innenumfang der Hohlwalze gegen das Querhaupt "angesaugt" als auch "fortgeschoben" werden kann. Zur Erzielung solcher Wirkungen wurden bisher auf verschiedenen Seiten des Querhaupts gelegene Elemente benötigt, die entsprechende Bohrungen in dem Querhaupt erforderten und dieses dementsprechend schwächten.

Die grundsätzliche vorrichtungsmäßige Ausbildung der Elemente zur Bildung der Zonen ist in Anspruch 3 wiedergegeben.

Die "Stempel" vereinigen die Funktionen der Druckstücke nach der DE-A 22 30 139 und der ringförmigen Dichtungsglieder nach der DE-C 30 03 395. Das Problem besteht darin, daß, wenn die Stempel als Überdruckelemente arbeiten sollen und in der Zylinderkammer dementsprechend ein hoher Druck herrscht, der Stempel gegen diesen Druck bis auf die Drosselbohrungen abgedichtet sein muß, damit die erforderliche Anpressung an den Innenumfang der Hohlwalze stattfinden kann. Wenn der Stempel aber als Unterdruckelement arbeiten soll, muß in die hydrostatische Druckkammer einströmende Druckflüssigkeit ungehindert, d.h. ohne nennenswerten Druckaufbau abströmen können. Der Strömungswiderstand muß also in den beiden Richtungen verschieden sein. Zu diesem Zweck sind in den Stempeln, deren grundsätzlicher Aufbau den Druckstücken der DE-A 22 30 139 entspricht, die zusätzlichen Rückschlagventile angeordnet.

Nur als Überdruckelemente arbeitende Stützelemente in einer einseitigen Längskammer herkömmlicher Art, die hydraulisch hintereinandergeschaltet sind, sind für sich genommen aus der DE-B 23 32 861 bekannt.

In der einfachsten Ausführungsform gemäß Anspruch 4 stehen die Drosselbohrungen mit dem Zylinderraum in Verbindung.

Die dem Zylinderraum zugeführte Druckflüssigkeit schiebt beim Betrieb als Überdruckelement den Stempel gegen den Innenumfang der Hohlwalze, wobei durch die Drosselbohrungen aus dem Zylinderraum die zum Aufbau des hydrostatischen Drucks erforderliche Druckflüssigkeit in die hydrostatischen Druckkammern einströmt.

Hierbei braucht also dem Zylinderraum nur ein Druck zugeführt zu werden.

Bei einer alternativen Ausführungsform nach Anspruch 5. sind die Zuleitungen zu dem Zylinderraum und zu der hydrostatischen Kammer getrennt. Der Druck in der hydrostatischen Kammer stellt sich also nicht von selbst ein, sondern muß extern in Abhängigkeit von dem Druck in dem Zylinderraum geregelt werden.

Eine für die befriedigende Funktionsfähigkeit in der Praxis wichtige Ausgestaltung sind die vorgelagerten Ableitkammern nach Anspruch 6. Die Ableitkammern nehmen in beiden Betriebszuständen des Stempels als Überdruckelement und Unterdruckelement über die Berandung des jeweils den höheren Druck aufweisenden Bereichs durch Anhaften am Innenumfang der Hohlwalze mitgeführte Druckflüssigkeit auf und fangen sie ab, bevor sie in den Bereich niedrigeren Drucks gelangen kann.

Arbeitet der Stempel beispielsweise als Überdruckelement und herrscht in dem Zylinderraum ein höherer Druck als in dem Zwischenraum zwischen dem Querhaupt und der Hohlwalze, so tritt ohne besondere Vorkehrungen ständig eine gewisse Menge von Druckflüssigkeit aus der hydrostatischen Druckkammer in den Zwischenraum über. Das kann zum Beispiel zu Problemen führen, wenn die Druckflüssigkeit im Zwischenraum und die Druckflüssigkeit in dem Zylinderraum unterschiedliche Temperaturen aufweisen. Die ausgeschleppte Druckflüssigkeit erzeugt dann eine ringförmige kältere Zone am Innenumfang der Hohlwalze, die zu Temperaturungleichmäßigkeiten längs der Hohlwalze Anlaß ist; die sich schon störend bemerkbar machen können.

Im anderen Fall, wenn also der Druck in dem Zwischenraum zwischen Querhaupt und Hohlwalze höher ist als in dem Zylinderraum, wird ohne besondere Vorkehrungen Druckflüssigkeit aus dem Zylinderraum in den Bereich der hydrostatischen Druckkammer eingeschleppt und kann dort zu einem die angestrebte Funktion verfälschenden Druckaufbau Anlaß sein. Durch die Ableitkammer wird die über den Rand des Stempels eingeschleppte Druckflüssigkeit vorher abgefangen.

Eine besondere Ausführungsform ist Gegenstand des Anspruchs 7.

Der Überhang am Rand des Stempels ist notwendig, da es für eine einwandfreie Funktion des Stempels als Überdruckelement erforderlich ist, daß der Stützquerschnitt der hydrostatischen Druckkammer größer ist als der Querschnitt des Zylinders. Dies läßt sich nur bewerkstelligen, wenn die gegen den Innenumfang der Hohlwalze anliegende Stützfläche des Stempels größer ist als dessen kolbenartiger Teil. Dadurch kommt es zwangsläufig zu einem Überhang. Wird der Stempel als Unterdruckelement betrieben, so greift der dann in dem Zwischenraum zwischen Querhaupt und Hohlwalze anstehende höhere Druck unter den Überhang und preßt den Stempel mit entsprechender Kraft gegen den Innenumfang der Hohlwalze. Bei hohen Drücken in dem Zwischenraum kann diese Kraft zu hoch werden. Aus diesem Grund ist eine Druckentlastung geschaffen, insofern beim Betrieb als Unterdruckelement der hohe Druck des Zwischenraums über das Rückschlagventil in die innere Kammer des Stempels und von dort über die Drosselbohrungen der hydrostatischen Druckkammer zugeleitet wird. Dadurch baut sich in dieser ein Druck auf, der dem gegen den Überhang wirkenden Druck entgegengerichtet ist und den Stempel entlastet. Es versteht sich, daß hierbei eine geeignete Anpassung der Wirkungsquerschnitte erfolgt.

Gemäß Anspruch 8 kann der Zylinderraum über eine Drosselbohrung mit der Ableitkammer verbunden sein.

Dadurch kann beim Betrieb des Stempels als Überdruckelement der Wirkungsquerschnitt der Ableitkammer ebenfalls zur Ausübung hydrostatischen Druckes genutzt werden.

Eine zweckmäßige Ausführungsform ist Gegenstand des Anspruchs 9.

Die hydrostatische Druckkammer liegt hierbei wie eine Insel im Innern der Ableitkammer. Sie kann auf diese Weise in ihrem Wirkungsquerschnitt dem Wirkungsquerschnitt des Überhangs angepaßt werden, so daß die den Stempel vom Innenumfang der Hohlwalze wegzudrücken bestrebte Kraft nicht zu groß wird. Dennoch steht für den Betrieb als Überdruckelement ein großer Wirkungsquerschnitt zur Verfügung, nämlich der Wirkungsquerschnitt der eigentlichen hydrostatischen Druckkammer und der Ableitkammer.

In der bevorzugten Ausführungsform nach Anspruch 10 sind die Stempel alle auf einer Seite des Querhauptes, nämlich auf der Seite des Walzspalts angeordnet.

Der Vorteil hierbei ist, daß mit einer solchen Anordnung die Hohlwalze mit positiver Kraft sowohl vom Walzspalt hinweg gegen das Querahupt angezogen als auch gegen den Walzspalt hin vom Querahupt weggedrückt werden kann. Ein Anwendungsfall ist eine Walze mit innerem Hub, die dadurch mit Kraft gelüftet werden kann, also zum Beispiel auch dann, wenn der Walzspalt unten liegt und die Lüftung gegen das Gewicht der Hohlwalze erfolgen muß. Gleichzeitig kann aber auch ein Liniendruck ausgeübt werden.

Die Vielfalt der Druckausübung kann noch erhöht werden, wenn gemäß Anspruch 11 zusätzliche Zonen erhöhten Drucks angebracht werden, was zum Beispiel durch Vorsehung von Druckgliedern etwa nach der DE-A 2 230 139 verwirklicht werden kann. In der Zeichnung sind Ausführungsbeispiele der Erfindung dargestellt.

Fig. 1 zeigt schematisch die Ansicht eines Walzenpaars, von dem die obere Walze als erfindungsgemäße Walze mit Zonen gegenüber dem Zwischenraum zwischen Querhaupt und Hohlwalze erniedrigten Drucks ausgebildet ist, teilweise im Schnitt;

Fig. 2 zeigt einen Querschnitt gemäß der Linie II-II in Fig. 1 in leicht vergrößertem Maßstab;

Fig. 3 zeigt eine Ansicht entsprechend Fig. 1 eines Walzenpaars, bei welchem die Oberwalze mit Stempeln ausgerüstet ist, die sowohl als Unterdruckelemente als auch als Überdruckelemente arbeiten können;

Fig. 4 zeigt einen Schnitt nach der Linie IV-IV in Fig. 3;

Fig. 5 zeigt einen vergrößerten Teilquerschnitt durch eine erfindungsgemäße Walze mit einer ersten Ausführungsform eines Stempels;

Fig. 6 zeigt einen Querschnitt entsprechend Fig. 5 in verkleinertem Maßstab, worin der hydraulische Schaltplan der Walze nach Fig. 5 angegeben ist;

Fig. 7 zeigt eine Ansicht auf den Stempel nach Fig. 5 von oben;

Fig. 8 zeigt schematisch einen Kalanderstapel, in welchem die erfindungsgemäße Walze schraffiert angedeutet ist;

Fig. 9 zeigt einen Teillängsschnitt durch das Ende einer erfindungsgemäßen Walze mit innerem Hub;

Fig. 10, 11 und 12 zeigen den Fig. 5, 6 und 7 entsprechende Ansichten einer weiteren Ausführungsform;

Fig. 13, 14 und 15 zeigen den Fig. 5, 6 und 7 entsprechende Ansichten einer dritten Ausführungsform;

Fig. 16, 17, 18 und 19 zeigen den Fig. 1 bis 4 entsprechende Ansichten von Ausführungsbeispielen mit dem universell einsetzbaren Dichtungsglied.

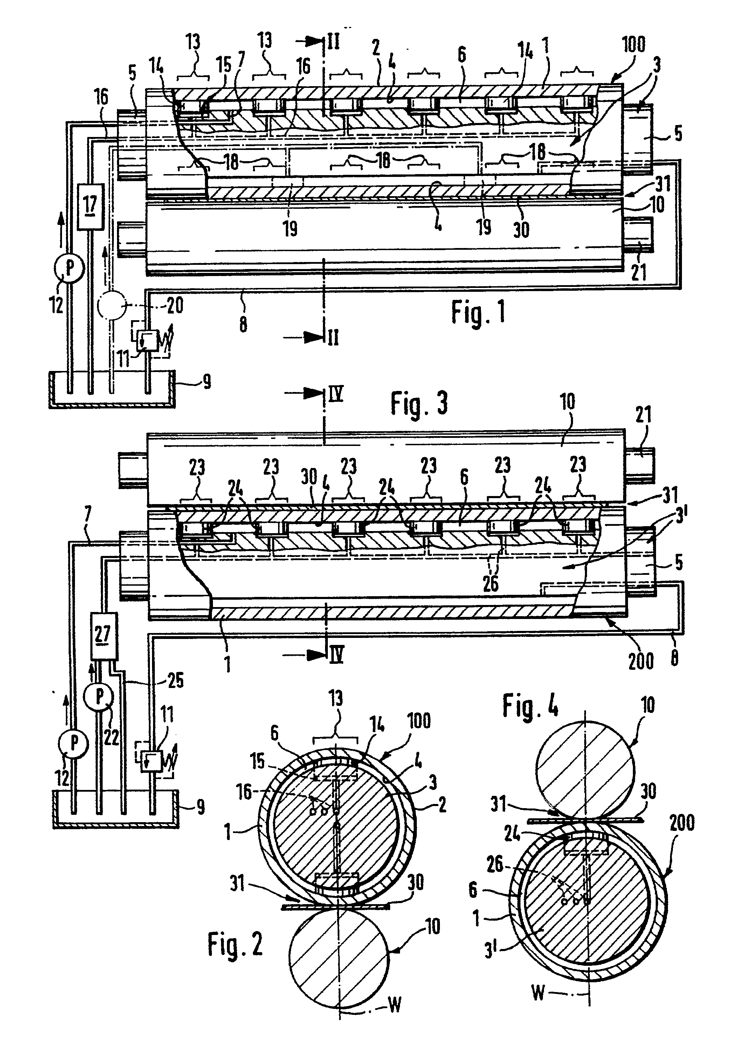

Die in den Fig. 1 und 2 dargestellte Walzenanordnung umfaßt eine Unterwalze 10 und eine Oberwalze 100, zwischen denen eine Warenbahn 30 einer Druckbehandlung in dem Walzspalt 31 ausgesetzt wird. Die Unterwalze 10 ist eine konventionelle massive Walze. Die Oberwalze 100 hingegen umfaßt eine umlaufende Hohlwalze 1, deren Außenumfang 2 den arbeitenden Walzenumfang bildet und die der Länge nach von einem stillstehenden Querhaupt 3 durchgriffen ist, welches allseitig Abstand zum Innenumfang 4 der Hohlwalze 1 beläßt, so daß es sich innerhalb der Hohlwalze 1 durchbiegen kann, ohne mit dem Innenumfang 4 in Berührung zu kommen.

Die Zapfen 21 der Unterwalze 10 sowie die aus der Hohlwalze 1 an den Enden vorstehenden Enden 5 des Querhauptes 3 sind im Walzenständer geführt und werden durch geeignete nicht dargestellte Belastungsvorrichtungen gegeneinandergedrückt.

Die Hohlwalze 1 kann an ihren Enden auf dem Querhaupt 3 durch in den Fig. 1 und 2 nicht dargestellte Lager drehbar gelagert sein. Bei einem alternativen Ausführungsbeispiel ist die Hohlwalze 1 an dem Querhaupt 3 in der Wirkebene W d.h. in der in Fig. 1 parallel zur Zeichenebene gelegenen Verbindungsebene der Achsen der beiden Walzen 10 und 100, geführt und kann sich als Ganzes gegenüber dem Querhaupt 3 in dieser Ebene verlagern.

Der Zwischenraum 6 zwischen dem Querhaupt 3 und dem Innenumfang 4 der Hohlwalze 1 ist an den Enden durch nicht dargestellte Endquerdichtungen abgedichtet und kann über eine Zuleitung 7 mit Druckflüssigkeit gefüllt werden, die über eine Leitung 8 wieder in den Vorratsbehälter 9 zurückführbar ist. In der Leitung 8 ist ein Druckbegrenzungsventil 11 angeordnet, welches es gestattet, in dem Zwischenraum 6 einen vorgebbaren Druck aufrechtzuerhalten. Die Zuleitung 7 mündet an dem in Fig. 1 linken Ende in den Zwischenraum 6 ein, die Rückleitung 8 am rechten Ende. Auf diese Weise ergibt sich eine Strömung in Längsrichtung des Zwischenraums, die zu einer Vergleichmäßigung der Temperatur der Hohlwalze 1 führt, wenn die Druckflüssigkeit gleichzeitig zur Beeinflussung der Temperatur dient. Die Druckflüssigkeit wird dem Vorratsbehälter entnommen und über eine Pumpe 12, an die die Zuleitung 7 angeschlossen ist, auf Druck gebracht.

Dieser Druck herrscht in dem keinerlei Unterteilungen aufweisenden hohlzylindrischen Zwischenraum 6 überall in gleicher Weise, so daß er ohne zusätzliche Maßnahmen keine Kraftwirkungen auf die Hohlwalze 1 ausüben würde, die zu einer Verlagerung bzw. Kraftausübung derselben in der Wirkebene W führt. Die Hohlwalze 1 wird durch den Druck im Zwischenraum 6 lediglich "aufgeblasen", ohne sonstige von außen erkennbare Wirkungen zu zeigen.

Nun sind aber in der Hohlwalze 1 auf der dem Walzspalt 31 abgelegenen Seite Zonen 13 gebildet, in denen der in dem Zwischenraum 6 herrschende Druck ausgespart ist. Die Längenerstreckung der Zonen ist durch die kleinen Klammern angedeutet. In dem Ausführungsbeispiel der Fig. 1 und 2 sind sechs solcher Zonen vorhanden, doch ist diese Zahl keineswegs zwingend.

Die Zonen 13 sind durch ringförmige Dichtungselemente 14 gebildet, die in zylindrischen Sackbohrungen 15 an der Oberseite des Querhauptes 3 verschiebbar geführt sind und mit einer entsprechend gestalteten Stirnseite dichtend am Innenumfang 4 der Hohlwalze 1 anliegen. Jede der Sackbohrungen 15 ist über eine Verbindungsleitung mit einer von mehreren Zuleitungen 16 (Fig. 2) und über diese mit einer Steuereinrichtung 17 verbunden, mittels deren im Innern der ringförmigen Dichtungsglieder 14, also in den Zonen 13, ein Druck aufrechterhalten werden kann, der niedriger ist als der Druck in dem Zwischenraum 6 und der in den einzelnen Stempeln 14 oder in Gruppen von Stempeln 14 je nach der Zahl der Zuleitungen 16 unabhängig gesteuert werden kann. Im einfachsten Fall verbindet die Steuereinrichtung 17 die Zonen 13 einfach mit dem Vorratsbehälter 9, so daß die Zonen 13 praktisch drucklos sind.

Auf diese Weise werden in dem ansonsten gleichmäßigen Druck in dem Zwischenraum 6 gewissermaßen "Löcher" oder "Leerstellen" ausgespart, in denen der Druck nicht herrscht. Dadurch wird die Druckausübung der in dem Zwischenraum 6 befindlichen Flüssigkeit verungleichmäßigt. Den Zonen 13 liegen bezüglich der Meridianebene der Walze 100, d.h. der zur Zeichenebene in Fig. 1 senkrechten Längsmittelebene der Walze 100 bzw. des Querhaupts 3 gedachte Zonen 18 gegenüber, die in Fig. 1 wieder durch kleine Klammern angedeutet sind und in denen der volle Druck in dem Zwischenraum 6 herrscht. Da diesen Zonen 18 oberhalb der Meridianebene in den Zonen 13 kein oder nur ein verminderter Druck gegenübersteht, ist die Gesamtwirkung des Vorhandenseins der Zonen 13 im wesentlichen die gleiche, als würde an der Unterseite des Querhaupts 3 lokal, also in den durch die Zonen 18 gegebenen Bereichen ein dem Druck in dem Zwischenraum 6 entsprechender Druck ausgeübt, der gemäß Fig. 1 die Hohlwalze 1 gegenüber dem Querhaupt 3 nach unten, d.h. gegen den Walzspalt 31 hin, zu verlagern bestrebt ist. Obwohl also bei der Walze 100 die ringförmigen Dichtungsglieder 14 auf der Oberseite des Querhaupts 3 angeordnet sind, erfolgt die Kraftausübung nach unten. Dies wird durch das Grundprinzip erreicht, den Zwischenraum 6 rundum, also ohne Längsunterteilungen mit Druckflüssigkeit unter einem einheitlichen Druck zu füllen.

In Fig. 1 sind noch zwei weitere Druckstempel 19 dargestellt, die an der Unterseite des Querhaupts 3 angeordnet sind und eine positive Kraft gegen die Unterseite des Innenumfangs 4 der Hohlwalze 1 ausüben können. Sie werden von einer Pumpe 20 mit Druckflüssigkeit versorgt. Natürlich kann der Druck zur Versorgung der Druckstempel 19 auch von der Pumpe 12 abgeleitet sein. Da die Druckstempel 19 lediglich zusätzliche Elemente sind, mittels deren die durch die Zonen 13 hervorgerufene Liniendruckverteilung fakultativ modifizierbar ist, sind die Druckstempel 19 mit ihren Zuleitungen und ihrer Pumpe 20 strichpunktiert wiedergegeben.

In den Fig. 3 und 4 ist eine wesentliche Weiterentwicklung des Gedankens der Erfindung dargestellt. Soweit die Teile denen der Fig. 1 entsprechen, sind die Bezugszahlen gleich.

In der Walzenanordnung der Fig. 3 und 4 ist eine Unterwalze 200 vorgesehen, die ebenso wie die Oberwalze 100 nach der Fig. 1 und 2 eine um ein Querhaupt 3' umlaufende Hohlwalze 1 umfaßt, die gegen eine Oberwalze 10 arbeitet und einen Druck auf eine Warenbahn 30 ausübt. Auch bei der Walze 200 ist der Zwischenraum 6 zwischen dem Innenumfang 4 der Hohlwalze 1 und dem Querhaupt 3' über eine Zuleitung 7 und eine Rückleitung 8 vollständig mit Druckflüssigkeit unter einem wählbaren Druck füllbar, doch sind in diesem Fall die an sich gleichmäßige Druckverteilung unterbrechende und einen Liniendruck erzeugende Stempel 24 auf der Seite des Walzspalts 31 angeordnet. Die Stempel 24 der Walze 200 unterscheiden sich dadurch von den ringförmigen Dichtungsgliedern 14 der Fig. 1 und 2, daß es mit ihnen sowohl möglich ist, über die Zuleitungen 26 in den durch die Stempel abgeteilten Zonen 23 einen gegenüber dem Zwischenraum 6 erniedrigten Druck als auch einen gegenüber dem Zwischenraum 6 erhöhten Druck einzustellen. Mittels der Steuereinrichtung 27 kann also das Innere der Stempel 24 wahlweise über die Leitung 25 z.B. mit dem Vorratsbehälter 9 verbunden werden, so daß in ihnen praktisch kein Druck herrscht, oder es kann mittels der Pumpe 22 auf die Stempel 24 in den Zonen 23 ein gegenüber dem Druck in dem Zwischenraum 6 erhöhter Druck aufgegeben werden.

Auf diese Weise erhalten die Stempel 24 zwei Funktionen: Herrscht in den Zonen 23 ein niedrigerer Druck als in dem Zwischenraum 6, so hat der Druck in dem Zwischenraum 6 in den den Zonen 23 gegenüberliegenden, in Fig. 3 nicht gekennzeichneten Zonen die Überhand und entsteht eine Kraft, die die Hohlwalze 1 von der Gegenwalze 10 wegzuziehen bestrebt ist. Wenn also die Hohlwalze 1 an den Enden nicht gelagert, sondern als Ganzes gegenüber dem Querhaupt 3' in der Wirkebene W verlagerbar ist, kann auf diese Weise ein Lüften der Hohlwalze 1 vom Walzspalt 31 stattfinden, beispielsweise um die Warenbahn 30 einfädeln zu können. In diesem Fall wirken die Stempel 24 also als "Unterdruckelemente". Wird aber in den Stempeln 24 ein gegenüber dem Zwischenraum 6 erhöhter Druck erzeugt, so wirken sie als gemäß Fig. 3 nach oben, d. h. gegen den Walzspalt 31 gerichtete Kraftausübungselemente, mittels deren ein Liniendruck in bestimmter Verteilung erzielbar ist. In diesem Fall sind die Stempel 24 "Überdruckelemente".

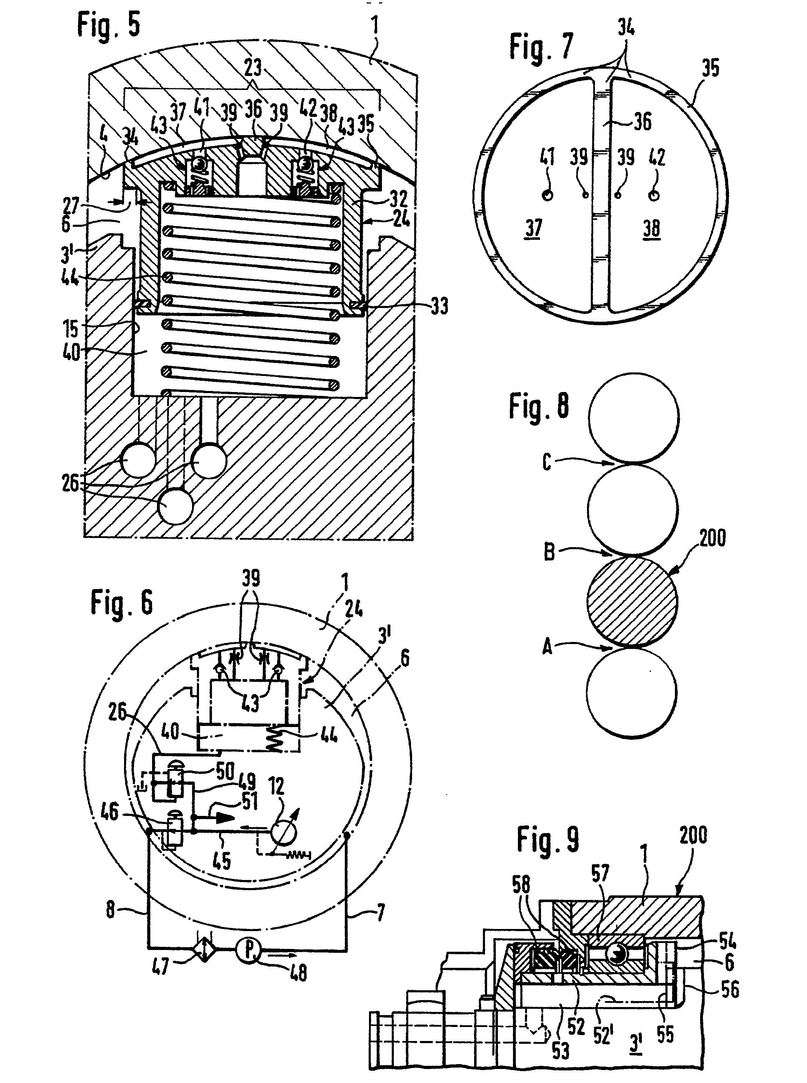

Praktische Ausführungsformen der in den Fig. 3 und 4 nur schematisch dargestellten Stempel 24, die sowohl als Unterdruckelemente als auch als Überdruckelemente arbeiten können, sind in den Fig. 5 bis 15 erläutert. Als Anwendungsbeispiel ist die Walze 200 gewählt, doch gilt alles Gesagte sinngemäß auch für die Walze 100.

In den Fig. 5 bis 7 ist der einfachste Stempel 24 wiedergegeben. Der Stempel 24 besteht aus einem topfförmigen Gußteil 32 aus einer geeigneten Bronze, welches mit seiner offenen Seite nach unten in die Sackbohrung 15 eingesetzt und darin nach Art eines Kolbens beweglich ist, wobei die Abdichtung durch einen am unteren Rand des topfförmigen Gußteils 32 angeordneten umlaufenden Dichtring 33 erfolgt. Am Boden 34 des topfförmigen Gußteils 32 ist eine in ihrer Gestalt dem Innenumfang 4 der Hohlwalze 1 angepaßte Stützfläche 34 gebildet, mit der der Stempel 24 gegen den Innenumfang 4 der Hohlwalze 1 anliegt. Die Anlage erfolgt in den Fig. 5, 6; 10, 11 und 13, 14 von unten gegen die Oberseite der Hohlwalze 1, also in der gleichen Richtung wie in dem Ausführungsbeispiel der Fig. 3 und 4.

Die Stützfläche 34 umfaßt einen geschlossen umlaufenden stegartig gegen den Innenumfang 4 der Hohlwalze 1 vorstehenden Rand 35 sowie einen in der Wirkebene gelegenen Verbindungssteg 36. Der Rand 35 und der Verbindungssteg 36 umgrenzen zwei in Umfangsrichtung der Hohlwalze 1 benachbarte hydrostatische Druckkammern 37,38, die gegenüber der Stützfläche 34 eine flache Vertiefung bilden. In einem praktischen Ausführungsbeispiel hat der Rand 35 einen Außendurchmesser von etwa 180 bis 200 mm und sind die hydrostatischen Druckkammern 6 bis 8 mm tief.

Der im Innern der Sackbohrung 15 unterhalb des Stempels 24 gebildete Zylinderraum 40 steht über zwei Drosselbohrungen 39 mit den hydrostatischen Druckkammern 37 und 38 in Verbindung. Außerdem sind in dem "Boden" des den Stempel 24 bildenden topfförmigen Gußteils 32 von den hydrostatischen Druckkammern 37 bzw. 38 in den Zylinderraum führende Kanäle 41 bzw. 42 vorgesehen, in denen in dem Ausführungsbeispiel also Kugelrückschlagventile ausgebildete Rückschlagventile 43 angeordnet sind, die in der Richtung gegen den Zylinderraum 40 hin öffnen, in der entgegengesetzten Richtung sperren.

Wie aus Fig. 5 ersichtlich ist, sind in dem Querhaupt 3' drei Zuleitungen 26 vorgesehen, von denen die in Fig. 5 rechte mit dem Zylinderraum 40 verbunden ist. Eine andere Zuleitung 16 ist mit einem benachbarten Stempel 24 verbunden usw.. In vielen Fällen reicht es aus, wenn ein zwar über die Breite der Bahn veränderlicher, jedoch zur Bahnmitte symmetrischer Liniendruck ausgeübt werden kann. In einem solchen Fall lassen sich mit den drei Zuleitungen 26 sechs Stempel 24 versorgen, wie sie in dem Ausführungsbeispiel der Fig. 3 vorgesehen sind. Es versteht sich, daß auch andere Stempelanzahlen vorhanden sein können. Wenn die Stempelanzahl gerade ist und es nur auf eine zur Mitte symmetrische Liniendruckverteilung ankommt, reicht die Hälfte der Stempelzahl als Zahl der Zuleitung aus. Bei höheren Ansprüchen an die unabhängige Steuerbarkeit muß für jeden Stempel 24 eine eigene Zuleitung vorgesehen sein.

Der Stempel 24 wird durch eine Schraubendruckfeder 44, die sich gegen den Boden der Sackbohrung 15 und gegen den Boden des topfförmigen Gußteils 32 abstützt, ständig, d.h. auch ohne Flüssigkeitsdruck, in Anlage am Innenumfang der Hohlwalze 1 gehalten. Bei Vorlage von Flüssigkeitsdruck in dem Zwischenraum 6 wirkt außerdem eine Anlagedruck in dem Überhang 27, d.h. dem Vorsprung an der Unterseite des Kopfes des Stempels 24. Dieser Überhang 27 ergibt sich aus konstruktiven Gründen, wenn den Druckkammern 37,38 mindestens der gleiche Wirkungsquerschnitt gegeben werden muß wie der Sackbohrung 15.

Wenn der Stempel 24 als Überdruckelement arbeiten soll, wird über die jeweils zuständige Zuleitung 26 Druckflüssigkeit unter einem Druck herangeführt, der höher ist als der Druck in dem Zwischenraum 6. Der Zylinderraum 40 füllt sich mit dieser Druckflüssigkeit, und es tritt Druckflüssigkeit über die Drosselbohrungen 39 in die hydrostatischen Druckkammern 37,38 ein, bis diese gefüllt sind. Der Wirkungsquerschnitt der hydrostatischen Druckkammern 37 und 38 ist ein wenig größer als der Wirkungsquerschnitt des Drucks in der Zylinderkammer 40, d.h. im Querschnitt der Sackbohrung 15. Dadurch vermag die Druckflüssigkeit in den hydrostatischen Druckkammern 37,38, den Stempel 24 ein wenig vom Innenumfang 4 der Hohlwalze 1 abzudrücken. Druckflüssigkeit strömt dann über den Rand 35 in den Zwischenraum 6 über. Durch diesen Flüssigkeitsverlust fällt der Druck in den hydrostatischen Druckkammern 37,38 wegen des Vorhandenseins der Drosselbohrungen 39 praktisch augenblicklich ab, wodurch sich der am Rand 35 entstandene Spalt wieder schließt und der Druck in den hydrostatischen Druckkammern 37,38 wieder ansteigt. Es bildet sich auf diese Weise ein Gleichgewicht aus, wobei der Rand 35 und der Verbindungssteg 36 stets auf einer dünnen Flüssigkeitsschicht laufen und nicht in metallischen Kontakt mit dem Innenumfang 4 der Hohlwalze 1 kommen.

Es sind zwei hydrostatische Druckkammern 37,38 vorgesehen, damit der Stempel 24 am Innenumfang 4 der Hohlwalze 1 besser stabilisiert werden kann und sich die tragende Flüssigkeitsschicht gleichmäßiger ausbildet.

Auf diese Weise kann eine Kraft gegen den Innenumfang 4 der Hohlwalze 1 ausgeübt werden, die höher ist als die Kraft, die sich ergäbe, wenn sich im Wirkungsquerschnitt der hydrostatischen Druckkammern 37,38 der Druck in dem Zwischenraum 6 auswirkte.

Bei der anderen Betriebsweise, bei der also der Stempel 24 als Unterdruckelement arbeitet, ist die zuständige Zuleitung 26 beispielsweise mit dem Vorratsbehälter direkt verbunden. Der Zylinderraum 40 wird aber dennoch durch die Feder 44 in Anlage am Innenumfang 4 der Hohlwalze 1 gehalten, auch wenn in dem Zwischenraum 6 noch kein Druck herrschen sollte. Ist jedoch dort ein solcher Druck aufgebaut, so wird durch den Umlauf der Hohlwalze 1 und die Adhäsion der Druckflüssigkeit am Innenumfang 4 aus dem Zwischenraum 6 über den Rand 35 hinweg Druckflüssigkeit in die hydrostatischen Druckkammern 37,38 eingeschleppt werden, die normalerweise nach einiger Zeit zur Füllung dieser Druckkammern und zum Aufbau eines hydrostatischen Druckes in diesen führen würde. Um diesem Druckaufbau zu begegnen, sind die Rückschlagventile 43 vorgesehen, die schon bei einem geringen Druck in den Druckkammern 37,38 öffnen und die Druckflüssigkeit in den Zylinderraum 40 abströmen lassen. Auf diese Weise herrscht in der Zone 23 und in dem Zylinderraum 4o ein "Unterdruck", d.h. ein unter dem Druck in dem Zwischenraum 6 gelegener Druck.

Maßgeblich für die Doppelfunktion des Stempels 24 ist das Vorhandensein der Rückschlagventile 43. Diese blockieren den Flüssigkeitsdurchgang bei der Funktion als hydrostatisches Überdruckelement, setzen aber bei der Funktion als Unterdruckelement dem Flüssigkeitsabstrom keinen nennenswerten Widerstand entgegen.

In Fig. 6 ist ein hydraulisches Schaltbild der Walze wiedergegeben. Die Pumpe 12 erzeugt Druckflüssigkeit mit einem Druck von 60 bis 80 Bar, die über eine Leitung 45 u.a. auf des Reduzierventil 46 gelangt, in dem der Druck auf den in dem Zwischenraum 6 erwünschten Wert von ca. 30 Bar reduziert wird. Die Druckflüssigkeit wird in den Zwischenraum 6 eingespeist und ihm über die Leitung 8 entnommen, über einen Wärmetauscher 47geleitet, wo die Druckflüssigkeit bedarfsweise erwärmt oder gekühlt wird, und über eine Umwälzpumpe 48 und die Leitung 7 dem Zwischenraum 6 wieder zugeleitet. Die Umwälzpumpe 48 braucht keine großen Druckdifferenzen zu erzeugen, sondern hat lediglich für die Durchströmung des Zwischenraums 6 zu sorgen.

Über die Leitung 49 gelangt die von der Druckpumpe 12 abgegebene Druckflüssigkeit über einen Dreiwege-Druckregler 50 in die Zuleitung 26 und in den Zylinderraum 40 und passiert in der schon beschriebenen Weise die Drosselbohrungen 39 des Stempels 24. Der Pfeil 51 symbolisiert die Zuleitungen zu den weiteren Zylinderräumen 40, denen jeweils eigene Druckregler 50 zugeordnet sind, so daß der Druck individuell geregelt werden kann.

In Fig. 3 ist die Walze 200 in einer Anordnung mit nur einer Gegenwalze 10 wiedergegeben. Fig. 8 veranschaulicht schematisch die Verwendungsmöglichkeit der Walze 200 in einem Kalander mit vier Walzen. Durch die stetige Veränderbarkeit des Druckes von einem Bereich, in welchem die Walze 200 nach oben drückt, bis zu einem Bereich, in welchem sie nach unten wirkt, kann auf einfache Weise die Verteilung bzw. die Folge der Liniendrücke in den übereinander angeordneten Walzspalten A,B und C beeinflußt werden.

Wie bereits erwähnt, ist es leicht möglich, die Walze 200 als eine solche mit "innerem Hub" auszubilden, wenn die Hohlwalze 1 auf demQuerhaupt 3' an den Enden nicht gelagert, sondern in der Wirkebene als Ganze gegenüber dem Querhaupt 3' parallel zu sich selbst verschiebbar geführt ist.

In Fig. 9 ist die Hohlwalze 1 erkennbar, die gemäß der Zeichnung nach oben bzw. nach unten gegenüber dem Querhaupt 3' verlagerbar ist. Die Führung der Hohlwalze 1 senkrecht zur Wirkebene, d.h. in Bahnrichtung, erfolgt über einen Führungsring 52, der den Endbereich 53 des Querhauptes 3' mit radialem Abstand umgibt und an dem gemäß Fig. 9 rechten Ende ein gabelartiges Führungsstück 54 aufweist, dessen Schenkel einen radialen Führungssteg 55, der an einer Schulter 56 des Querhaupts 3' befestigt ist, zu beiden Seiten umgreifen. Der Führungsring 52 kann sich also aus der ausgezogen dargestellten Lage zum Beispiel in die strichpunktiert wiedergegebene Lage 52' verlagern. Gemäß Fig. 9 senkrecht zur Zeichenebene ist eine Verlagerung jedoch nicht möglich. Die Hohlwalze 1 ist auf dem Führungsring 52 über ein Lager 57 abgestützt, welches aber nur Führungsaufgaben hat und nicht zur Übertragung von Kräften in der Wirkebene bestimmt ist. In dem Zwischenraum 6 zwischen Hohlwalze 1 und Querhaupt 3' sind gemäß Fig. 9 rechts die Stempel 24 angebracht. Die Abdichtung des Zwischenraums 6 nach außen, d.h. gemäß Fig. 9 nach links, erfolgt durch die Gleitringdichtung 58.

Die Hohlwalze 1 kann also bei feststehendem Querhaupt 3' gegenüber diesem nach unten gezogen und nach oben gedrückt werden, wobei das Wesentliche ist, daß infolge der Doppelfunktion der Stempel 24 trotz der doppelten Kraftrichtung diese nur auf einer Seite des Querhauptes angebracht sein müssen und das Querhaupt nur auf einer Seite Schwächungen durch die Sackbohrungen 15 erfährt.

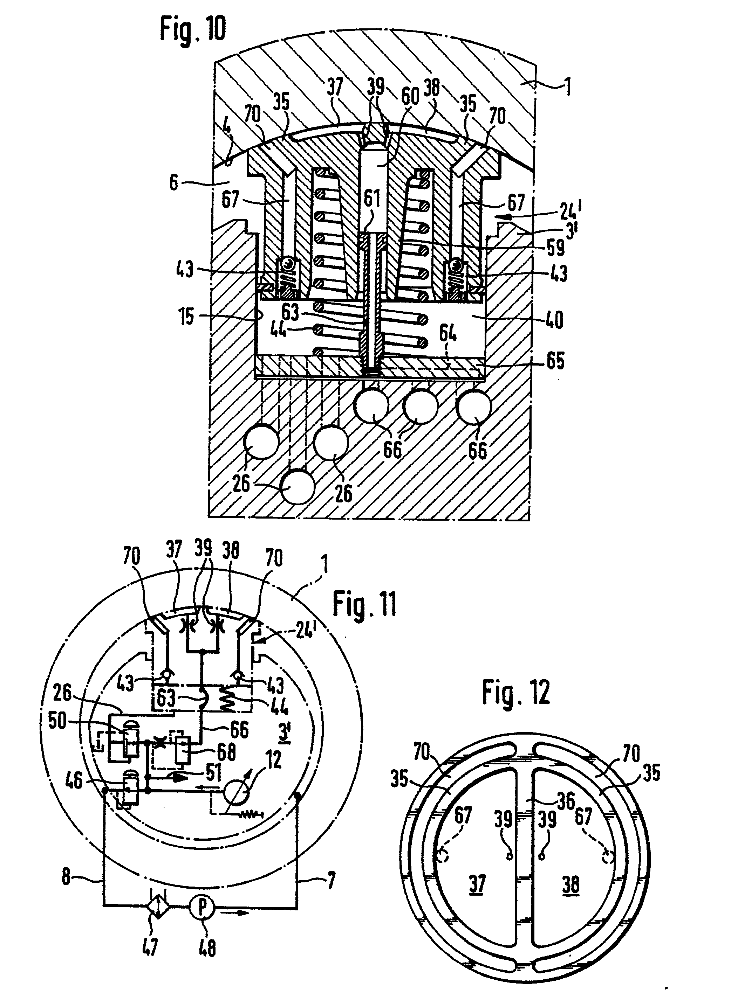

Der Stempel 24' der Fig. 10 bis 12 unterscheidet sich zunächst einmal dadurch von dem Stempel 24, daß die Drosselbohrungen 39 nicht in den Zylinderraum 40 münden, sondern in eine innere Kammer 60 des Stempels 24', die als zylindrische Bohrung eines mittigen, vom Boden in das Innere des "Topfes" hineinragenden Ansatzes 59 ausgebildet ist, in der der kolbenartige obere Endteil 61 einer Hülse 63 abgedichtet längsverschiebbar ist,.die an ihrem unteren Ende in eine auf dem Boden der Sackbohrung 15 angebrachte mit radialen Kanälen 64 versehene Verteilerplatte 65 eingeschraubt ist, durch die eine Verbindung der in der Achse der Sackbohrung 15 gelegenen Hülse 63 auch mit radial weiter außen gelegenen Zuleitungen 66 möglich ist.

Durch die wiedergegebene Anordnung kann der inneren Kammer 60 aus irgendeiner der Zuleitungen 66 Druck zugeführt werden, der von dem Druck in der Zylinderkammer 40 verschieden ist. Dabei ist durch die Teile 61,63 und 64 eine Leitungsanordnung gebildet, die bei jeder beliebigen Stellung des Stempels 24' in der Sackbohrung 15 funktioniert.

Der Sinn dieser Ausbildung liegt darin, daß den hydrostatischen Druckkammern 37,38 ein Druck zugeführt werden kann, der nicht mehr mit dem Druck in der Zylinderkammer 40 gekoppelt ist. Es braucht daher auch die Wirkfläche der Zylinderkammern 37,38 nicht mehr größer zu sein als die des in der Sackbohrung 15 verschiebbaren Teils des Stempels 24'. Über die Zuleitungen 66 wird den hydrostatischen Kammern 37,38 getrennt von den Zuleitungen 26 eine volumenmäßig geregelte Druckflüssigkeitsmenge zugeführt. Das pro Zeiteinheit

gleichbleibende zwangsweise zugeführte Druckflüssigkeitsvolumen strömt über den Rand 35 ab und stellt die stützende Flüssigkeitsschicht zwischen der Anlagefläche 34 und dem Innenumfang 4 der Hohlwalze 1 sicher. Der Druck in den hydrostatischen Kammern 37,38 stellt sich dabei von selbst ein und steht in keinem bestimmten Verhältnis zu dem Druck in der Zylinderkammer 40.

Ein weiterer wichtiger Unterschied zu dem Stempel 24 besteht darin, daß bei dem Stempel 24' außerhalb des Randes 35 der hydrostatischen Druckkammern 37,38 jeweils eine in Umfangsrichtung vorgelagerte Ableitkammer 70 vorgesehen ist, die über einen Kanal 67 und ein Rückschlagventil 43 mit der Zylinderkammer 40 verbindbar ist. Wie aus Fig. 12 zu ersehen ist, sind die beiden Ableitkammern 70 halbkreisförmig gestaltet und außerhalb des Randes 35 vorgesehen. Der Zweck der Ableitkammern 70 besteht darin, an dem Rand 35 übertretende Druckflüssigkeit abzufangen und dem Zylinderraum 40 zuzuleiten, wenn der Stempel 24' als Unterdruckelement arbeitet, d.h. wenn der Druck in dem Zwischenraum 6 größer ist als in den hydrostatischen Kammern 37,38. Dann wird ziemlich viel Druckflüssigkeit am Innenumfang 4 der Hohlwalze 1 mitgenommen und ohne die Ableitkammern 70 in die hydrostatischen Druckkammern 37,38 eingeschleppt. Dies verhindert zu einem großen Teil die Ableitkammer 70, die auf der der Drehrichtung der Hohlwalze 1 entgegengerichteten Seite des Stempels 24' vorgesehen ist. Durch die Einbaurichtung des Rückschlagventils 43 kann an der Ableitkammer 70 abgefangene Druckflüssigkeit bei einem Betrieb als Unterdruckelement ohne nennenswerten Widerstand abströmen, während umgekehrt bei einem Betrieb des Stempels 24' als Überdruckelement die Ableitkammern 70 verschlossen sind und unwirksam bleiben. Im ersteren Fall sind die Zylinderkammer 40 und die jeweilige Zuleitung 26 entlastet, während über die Leitung 66, die innere Kammer 60 und die Drosselbohrungen 39 in den Druckkammern 37,38 ein Druck beibehalten wird, der gerade zur Überwindung der Kraft der Feder 44 ausreicht, damit die Aufrechterhaltung des Flüssigkeitsfilms zwischen dem Rand 35 und dem Innenumfang 4 der Hohlwalze 1 gewährleistet ist. Dieser Druck ist aber wesentlich geringer als der Druck im Zwischenraum, so daß die Funktion als Unterdruckelement nicht tangiert ist.

Das Schaltbild nach Fig. 11 unterscheidet sich nur durch die separate Zuführung der Druckflüssigkeit über die Leitungsanordnung 66,63 von dem Schaltbild nach Fig. 6. Dieses ist durch ein zu den Zuleitungen 66 führendes Stromregelventil 68 ergänzt, welches, wie bereits erwähnt, die Menge der den hydrostatischen Druckkammern 37,38 zugeführten Druckflüssigkeit bestimmt. Jedem Stempel 24' bzw. jeder Gruppe von symmetrisch gelegenen derartigen Stempeln ist ein eigenes Stromregelventil 68 zugeordnet, damit sichergestellt ist, daß jeder Stempel 24' bzw. jede Gruppe solcher Stempel unabhängig von den anderen genau die ihnen zugemessene Druckflüssigkeitsmenge erhalten, wobei sich die Drücke von selbst einstellen.

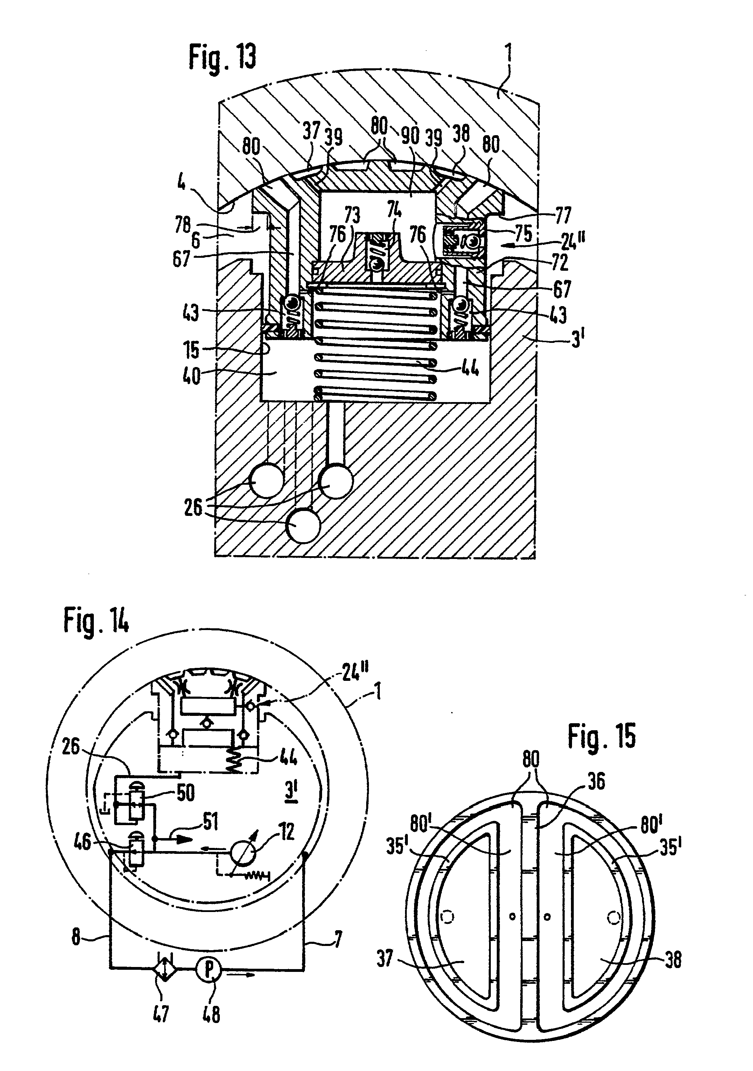

Bei der Ausführungsform 24'' nach den Fig. 13 bis 15 erfolgt keine separate Zuführung der Druckflüssigkeit zu den hydrostatischen Druckkammern 37 und 38, sondern es stellt sich der darin herrschende Druck wie bei dem Stempel 24 in Abhängigkeit von dem in dem Zylinderraum 40 herrschenden Druck von selbst ein. Dementsprechend sind auch neben den Zuleitungen 26 keine weiteren Zuleitungen (wie 66 in den Fig. 10-12) vorgesehen. Auch bei dem Stempel 24'' sind Ableitkammern 80 vorgesehen, die über Rückschlagventile 43, die gegen den Zylinderraum 40 hin öffnen, mit diesem verbunden sind. Die Rückschlagventil 43 sitzen in Kanälen 67. Auch die Ableitkanäle 80 sind etwa halbkreisförmig ausgebildet und den hydrostatischen Druckkammern 37,38 jeweils in Umfangsrichtung vorgelagert. Im Gegensatz zu dem Stempel 24' sind jedoch die Enden der halbkreisförmigen Ableitkanäle 80 bei dem Stempel 24'' durch Kanalteile 80' miteinander verbunden, so daß der Ableitkanal 80 insgesamt eine die jeweilige hydrostatische Druckkammer 37 bzw. 38 ringsum umgebende Ableitzone bildet. Die hydrostatischen Druckkammern 37,38 sind durch einen einen ringförmigen Dichtsteg bildenden Rand 35' ringsum gegen den Ableitkanal 80 abgetrennt. Die hydrostatischen Druckkammern 37,38 bilden also gewissermaßen Inseln innerhalb des Ableitkanals 80.

Auch der Stempel 24'' ist wieder durch ein topfförmiges Gußteil 72 gebildet, welches mit der offenen Seite nach unten in der Sackbohrung 15 angeordnet ist. Es ist jedoch durch einen in halber Höhe angeordneten Zwischenboden 73 in dem Stempel 24'' eine innere Kammer 90 abgeteilt, von der die in die hydrostatischen Druckkammern 37,38 mündenden Drosselbohrungen 39 ausgehen. In dem Zwischenboden 73 ist ein in die innere Kammer 90 öffnendes Rückschlagventil 74 angeordnet. Außerdem ist in der Seitenwandung des topfförmigen Gußteils 72 der inneren Kammer 90 ein mit dem Zwischenraum 6 in Verbindung stehendes in die innere Kammer 90 hinein öffnendes Rückschlagventil 75 angeordnet.

Bei dem Stempel 24'' liegt die Besonderheit darin, daß die Ableitkammern 80 im Falle des Betriebes als Überdruckelement als hydrostatische Druckkammern genutzt werden können. Hierfür ist wesentlich, daß von den die Rückschlagventile 43 enthaltenden Kanälen 67 Drosselbohrungen 76 ausgehen, die die Kanäle 67 in dem zwischen den Rückschlagventilen 43 und dem Innenumfang 4 der Hohlwalze 1 gelegenen Bereich mit dem Zylinderraum 40 verbinden.

Bei einem Betrieb als Überdruckelement wird dem Zylinderraum 40 Druckflüssigkeit unter einem Druck zugeführt, der höher als der Druck in dem Zylinderraum 6 ist. Die Druckflüssigkeit tritt über das Rückschlagventil 74 in die innere Kammer 90 und von dort über die Drosselbohrungen 39 in die hydrostatischen Kammern 37,38 über. Das Rückschlagventil 75 sperrt hierbei, so daß der Druck in der inneren Kammer 90 nicht etwa zusammenbrechen kann.

Außerdem tritt die Druckflüssigkeit aus dem Zylinderraum 40 über die Drosselbohrungen 76 und die Kanäle 67 in die Ableitkammern 80 ein, die also in diesem Fall ebenfalls als hydrostatische Kammer wirken.

Die Gesamtfläche der hydrostatischen Kammern 37,38 und der Ableitkammern 80 muß größer sein als die Wirkfläche des Stempels 24″ in der Sackbohrung 15, damit eine einwandfreie Lagerung des Stempels 24″ auf einem zwischen diesem und dem Innenumfang 4 gebildeten Flüssigkeitsfilm eintritt. Die gegen den Innenumfang 4 anliegende Stützfläche des Stempels 24 muß also notwendig größer sein als der Querschnitt der Lochbohrung 15, d.h. es gibt wie in Fig.5 an der Unterseite 77 des die Stützfläche bildenden Kopfteils des Stempels 24 einen Überhang 78, d.h. eine kreisringförmige, radial über den Umfang des unteren Teils des Stempels 24″ vorspringende Wirkfläche, an der in dem Zwischenraum 6 befindliche Druckflüssigkeit angreift und eine dem Stempel24″ gegen den Innenumfang 4 der Hohlwalze 1 drückende Kraft ausübt.

Dieser Umstand hat eine besondere Bedeutung, wenn der Stempel 24″ als Unterdruckelement betrieben wird, d.h. wenn der Druck in dem Zwischenraum 6 größer ist als der Druck in dem Zylinderraum 40 bzw. in dem Zylinderraum 40 überhaupt kein Druck herrscht. In diesem Fall wird von der Hohlwalze 1 beim Umlauf in die Ableitkammern 80 aus dem Zwischenraum 6 eingetragene Druckflüssigkeit über die Rückschlagventile 43 in den Zylinderraum 40 abgeführt. Der hohe Druck in dem Zwischenraum 6 wirkt aber in dem Überhang 78 und preßt den Stempel 24″ mit einer erheblichen Kraft gegen den Innenumfang 4 der Hohlwalze 1, was zu Störungen führen kann, da ja in diesem Fall normalerweise nicht wie im Überdruckbetrieb ein Flüssigkeitsfilm zwischen der Stützfläche des Stempels 24″ und dem Innenumfang 4 aufrechterhalten wird. Um diese Anpressung, die bis zur metallischen Reibung führen kann, zu entschärfen und gleichzeitig doch wieder einen gewissen Flüssigkeitsfilm zu erzeugen, ist das Rückschlagventil 75 vorgesehen. Durch dieses Ventil tritt nämlich Druckflüssigkeit aus dem Zwischenraum 6 in die innere Kammer 90 ein und wird durch das Rückschlagventil 74 am Abströmen in den Zylinderraum 40 gehindert. Sie strömt aber über die Drosselbohrungen 39 in die hydrostatischen Druckkammern 37,38 ein, die also in diesem Fall auch bei Unterdruckbetrieb ihre Funktion als hydrostatische Druckkammer beibehalten und eine Kraft erzeugen, die der an dem Überhang 78 wirkenden Kraft entgegengerichtet ist. Der Stempel 24″ wird auf diese Weise hydraulisch entlastet, wobei die Flächen des Überhangs 78 und der hydraulischen Druckkammern 37 und 38 aufeinander abgestimmt sind. Durch das Übertreten von Flüssigkeit aus den hydrostatischen Druckkammern 37 und 38 wird überdies wenigstens teilweise ein Flüssigkeitsfilm erzeugt, der eine metallische Berührung verhindert.

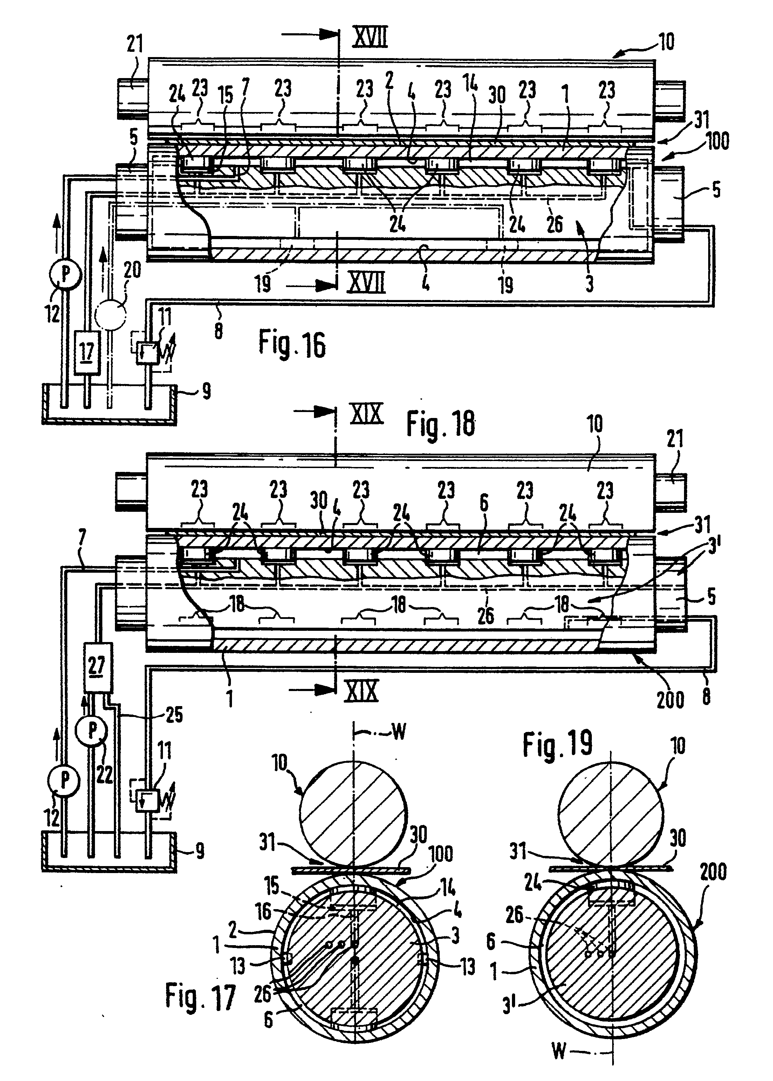

In den Fig. 16 bis 19 ist noch einmal die Anwendung von Druckgliedern erläutert, die sowohl einen gegenüber der Umgebung erhöhten als auch erniedrigten Druck ausüben können.

Die in den Fig. 16 und 17 dargestellte Walzenanordnung umfaßt eine Oberwalze 10 und eine Unterwalze 100, zwischen denen eine Warenbahn 30 einer Druckbehandlung in dem Walzspalt 31 ausgesetzt wird. Die Oberwalze 10 ist eine konventionelle massive Walze. Die Unterwalze 100 hingegen umfaßt eine umlaufende Hohlwalze 1, deren Außenumfang 2 den arbeitenden Walzenumfang bildet und die der Länge nach von einem stillstehenden Querhaupt 3 durchgriffen ist, welches allseitig Abstand zum Innenumfang 4 der Hohlwalze 1 beläßt, so daß es sich innerhalb der Hohlwalze 1 durchbiegen kann, ohne mit dem Innenumfang 4 in Berührung zu kommen.

Die Zapfen 21 der Oberwalze 10 sowie die aus der Hohlwalze 1 an den Enden vorstehenden Enden 5 des Querhauptes 3 sind im Walzenständer geführt und werden gegebenenfalls durch nicht dargestellte Belastungsvorrichtungen gegeneinandergedrückt.

Die Hohlwalze 1 kann an ihren Enden auf dem Querhaupt 3 durch in den Fig. 16 und 17 nicht dargestellte Lager drehbar gelagert sein. Bei einem alternativen Ausführungsbeispiel ist die Hohlwalze 1 an dem Querhaupt 3 in der Wirkebene **W** , d.h. in der in Fig. 16 parallel zur Zeichenebene gelegenen Verbindungsebene der Achsen der beiden Walze 10 und 100, geführt und kann sich als Ganzes gegenüber dem Querhaupt 3 in dieser Ebene verlagern.

In dem Zwischenraum 6 zwischen dem Querhaupt 3 und dem Innenumfang 4 der Hohlwalze 1 ist durch längs des Querhaupts 3 verlaufende, an der breitesten Stelle des Querschnitts einander diametral gegenüberliegende Längsdichtungen 13 eine auf der Seite des Walzspalts 31 gelegene Längskammer 14 abgeteilt, die an den Enden durch nicht dargestellte Endquerdichtungen abgedichtet ist und über eine Zuleitung 7 mit Druckflüssigkeit gefüllt werden kann, die über eine Leitung 8 wieder in den Vorratsbehälter 9 zurückführbar ist. In der Leitung 8 ist ein Druckbegrenzungsventil 11 angeordnet, welches es gestattet, in der Längskammer 14 einen vorgebbaren Druck aufrechtzuerhalten. Die Zuleitung 7 mündet an dem in Fig.16 linken Ende in die Längskammer 14 ein, die Rückleitung 8 am rechten Ende. Auf diese Weise ergibt sich eine Strömung in Längsrichtung der Längskammer 14, die zu einer Vergleichmäßigung der Temperatur der Hohlwalze 1 führt, wenn die Druckflüssigkeit gleichzeitig zur Beeinflussung der Temperatur dient. Die Druckflüssigkeit wird dem Vorratsbehälter entnommen und über eine Pumpe 12, an die die Zuleitung 7 angeschlossen ist, auf Druck gebracht.

In der Längskammer 14 der Hohlwalze 1 sind Zonen 23 gebildet, in denen der in der Längskammer 14 herrschende Druck ausgespart ist. Die Längenerstreckung der Zonen ist durch die kleinen Klammern angedeutet. In dem Ausführungsbeispiel der Fig.16 und 17 sind sechs solcher Zonen vorhanden, doch ist diese Zahl keineswegs zwingend.

Die Zonen 23 sind durch Dichtungsglieder in Gestalt von Stempeln 24 gebildet, die in zylindrischen Sackbohrungen 15 an der Oberseite des Querhauptes 3 verschiebbar geführt sind und mit einer entsprechend gestalteten Stirnseite dichtend am Innenumfang 4 der Hohlwalze 1 anliegen. Jede der Sackbohrungen 15 ist über eine Verbindungsleitung mit einer von mehreren Zuleitungen 26 (Fig. 17) und über diese mit einer Steuereinrichtung 17 verbunden, mittels deren im Bereich der Stempel 24, also in den Zonen 23, ein Druck aufrechterhalten werden kann, der von dem Druck der Längskammer 14 abweicht und der in den einzelnen Stempeln 24 oder in Gruppen von Stempeln 24 je nach der Anzahl der Zuleitungen 26 unabhängig gesteuert werden kann.

Es ist wesentlich, daß die Stempel 24 so ausgebildet sind, daß der Druck in ihnen sowohl höher als auch niedriger sein kann als der Druck in der Längskammer 14. Im einfachsten Fall der letzteren Alternative verbindet die Steuereinrichtung 17 die Stempel 24 einfach mit dem Vorratsbehälter 9, so daß die Stempel 24 praktisch drucklos sind.

Der an sich gleichmäßige Druck in der Längskammer 14 wird also in den Zonen 23 modifiziert, indem dort bei höheren Druck in den Stempeln 24 zusätzliche Einzelkräfte ausgeübt werden oder indem bei niedrigerem Druck in den Stempeln 24 aus dem gleichmäßigen Druckpolster in der Längskammer 14 "Löcher" ausgespart werden. Mit beiden kann die Liniendruckverteilung im Walzspalt 31 in unterschiedlicher Weise beeinflußt werden.

In Fig. 16 sind noch zwei weitere Druckstempel 19 dargestellt, die an der Unterseite des Querhaupts 3 angeordnet sind und eine positive Kraft gegen die Unterseite des Innenumfangs 4 der Hohlwalze 1 ausüben können. Sie werden von einer Pumpe 20 mit Druckflüssigkeit versorgt. Natürlich kann der Druck zur Versorgung der Druckstempel 19 auch von der Pumpe 12 abgeleitet sein. Da die Druckstempel 19 lediglich zusätzliche Elemente sind, mittels deren die durch die Zonen 13 hervorgerufene Liniendruckverteilung fakultativ modifizierbar ist, sind die Druckstempel 19 mit ihren Zuleitungen und ihrer Pumpe 20 strichpunktiert wiedergegeben.

In den Fig. 18 und 19 ist ein weiteres wichtiges Anwendungsbeispiel dargestellt. Soweit die Teile denen der Fig. 16 entsprechen, sind die Bezugszahlen gleich.

In der Walzenanordnung der Fig. 18 und 19 ist eine Unterwalze 200 vorgesehen, die ebenso wie die Unterwalze 100 nach den Fig. 16 und 17 eine um ein Querhaupt 3′ umlaufende Hohlwalze 1 umfaßt, die gegen eine Oberwalze 10 arbeitet und einen Druck auf eine Warenbahn 30 ausübt. Im Gegensatz zu dem Ausführungsbeispiel nach den Fig. 16 und 17 ist in dem Zwischenraum 6 hier aber keine Längsdichtung vorhanden, die eine einseitige Längskammer abteilt. Vielmehr ist bei der Walze 200 der gesamte Zwischenraum 6 zwischen dem Innenumfang 4 der Hohlwalze 1 und dem Querhaupt 3′ über die Zuleitung 7 und eine Rückleitung 8 vollständig mit Druckflüssigkeit unter einem wählbaren Druck füllbar.

Dieser Druck herrscht in dem keinerlei Unterteilungen aufweisenden hohlzylindrischen Zwischenraum 6 überall in gleicher Weise, so daß er ohne zusätzliche Maßnahmen keine Kraftwirkungen auf die Hohlwalze 1 ausüben würde, die zu einer Verlagerung bzw. Kraftausübung derselben in der Wirkebene W führt. Die Hohlwalze 1 wird durch den Druck im Zwischenraum 6 lediglich "aufgeblasen", ohne sonstige von außen erkennbare Wirkungen zu zeigen.

Auf der Seite des Walzspalts 31 sind jedoch die an sich gleichmäßige Druckverteilung unterbrechende und einen Liniendruck erzeugende Stempel 24 angeordnet. Mittels der Stempel 24 der Walze 200 ist es sowohl möglich, in den entsprechenden, durch die Stempel abgeteilten Zonen 23 einen gegenüber dem Zwischenraum 6 erniedrigten Druck als auch einen gegenüber dem Zwischenraum 6 erhöhten Druck einzustellen. Mittels der Steuereinrichtung 27 kann also das Innere der Stempel 24 wahlweise über die Leitung 25 z.B. mit dem Vorratsbehälter 9 verbunden werden, so daß in ihnen praktisch kein Druck herrscht, oder es kann mittels der Pumpe 22 auf die Stempel 24 in den Zonen 23 ein gegenüber dem Druck in dem Zwischenraum 6 erhöhter Druck aufgegeben werden.

Ist der Druck in den Zonen 23 niedriger und der Zwischenraum 6 ganz mit Druckflüssigkeit gefüllt, werden in dem ansonsten gleichmäßigen Druck in dem Zwischenraum 6 gewissermaßen "Löcher" oder "Leerstellen" ausgespart, in denen der Druck nicht herrscht. Dadurch wird die Druckausübung der in dem Zwischenraum 6 befindlichen Flüssigkeit verungleichmäßigt. Den Zonen 23 liegen bezüglich der Meridianebene der Walze 200, d.h. der zur Zeichenebene senkrechten horizontalen Längsmittelebene der Walze 200 bzw. des Querhaupts 3 gedachte Zonen 18 gegenüber, die in Fig. 18 wieder durch kleine Klammern angedeutet sind un in denen der volle Druck in dem Zwischenraum 6 herrscht. Da diesen Zonen 18 oberhalb der Meridianebene in den Zonen 23 kein oder nur ein verminderter Druck gegenübersteht, ist die Gesamtwirkung des Vorhandenseins der Zonen 23 im wesentlichen die gleiche, als würde an der Unterseite des Querhaupts 3 lokal, also in den durch die Zonen 18 gegebenen Bereichen ein dem Druck in dem Zwischenraum 6 entsprechender Druck ausgeübt, der gemäß Fig. 18 die Hohlwalze 1 gegenüber dem Querhaupt 3 nach unten, d.h. vom Walzspalt 31 weg, zu verlagern bestrebt ist. Obwohl also die Stempel 24 auf der Oberseite des Querhaupts 3 angeordnet sind, erfolgt in dem Fall die Kraftausübung nach unten. Dies resultiert daraus, daß der Zwischenraum 6 rundum, also ohne Längsunterteilungen, mit Druckflüssigkeit unter einem einheitlichen Druck gefüllt ist.

Auf diese Weise erhalten die Stempel 24 zwei Funktionen: Herrscht in den Zonen 23 ein niedrigerer Druck als in dem Zwischenraum 6, so hat der Druck in dem Zwischenraum 6 in den Zonen 23 gegenüberliegenden, in Fig. 18 mit 18 gekennzeichneten Zonen die Überhand und entsteht eine Kraft, die die Hohlwalze 1 von der Gegenwalze 10 wegzuziehen bestrebt ist. Wenn also die Hohlwalze 1 an den Enden nicht gelagert, sondern als Ganzes gegenüber dem Querhaupt 3′ in der Wirkebene verlagerbar ist, kann auf diese Weise ein Abheben der Hohlwalze 1 vom Walzspalt 31 stattfinden, beispeilsweise um die Warenbahn 30 einfädeln zu können. In diesem Fall wirken die Stempel 24 also als "Unterdruckelemente". Wird aber in den Stempeln 24 ein gegenüber dem Zwischenraum 6 erhöhter Druck erzeugt, so wirken sie als gemäß Fig. 18 nach oben, d.h. gegen den Walzspalt 31 gerichtete Kraftausübungselemente, mittels deren ein Liniendruck in bestimmter Verteilung erzielbar ist. In diesem Fall sind die Stempel 24 "Überdruckelemente".

Praktische Ausführungsformen der in den Fig. 16 bis 19 nur schematisch dargestellten Stempel 24, die sowohl als Unterdruckelemente als auch als Überdruckelemente arbeiten und sowohl in der Walze 100 als auch in der Walze 200 eingesetzt werden können, sind anhand der Fig. 5 bis 15 bereits erläutert worden. Als Anwendungsbeispiel war dabei eine Walze entsprechend der Walze 200 gewählt. Wenn dabei von dem Druck in dem Zwischenraum 6 die Rede war, so soll damit in dem Fall, daß der Stempel 24 in einer Walze mit Längsdichtungen 13 entsprechend der Walze 100 angeordnet ist, sinngemäß die Längskammer 14 gemeint sein.

## Patentansprüche

1. Walze mit steuerbarem Liniendruck mit einer den arbeitenden Walzenumfang bildenden umlaufenden Hohlwalze (1) und einem diese der Länge nach durchgreifenden, rundum Abstand vom Innenumfang (4) der Hohlwalze (1) belassenden feststehenden Querhaupt (3),

mit Endquerdichtungen, mittels deren der sich um das Querhaupt (3) herum zwischen der Hohlwalze (1) und dem Querhaupt (3) ersteckende Zwischenraum (6) zwischen der Hohlwalze (1) und dem Querhaupt (3) in Achsrichtung abdichtbar ist,

mit einer Einrichtung, mittels deren zumindest einem in Umfangsrichtung begrenzten Teil des Zwischenraums (6) Druckflüssigkeit unter steuerbarem Druck zuführbar ist,

und mit durch ringförmige, am Querhaupt (3) in dem Teil des Zwischenraums (6) angebrachte und gegen den Innenumfang (4) der Hohlwalze (1) anliegende Dichtungsglieder (14, 24) gegenüber dem Teil des Zwischenraums (6) abgeteilten Zonen (13, 23), in die im Querhaupt (3) angeordnete Zuleitungen (16, 26) münden, in die eine Ventilanordnung eingeschaltet ist, mittels deren die Zonen (13, 23) mit einem Bereich gegenüber dem Teil des Zwischenraums (6) niedrigeren Drucks verbindbar sind,

dadurch gekennzeichnet,

dass dem gesamten Zwischenraum (6) ausserhalb der Zonen (13, 23) Druckflüssigkeit unter überall gleichem Druck zuführbar ist.

2. Walze nach Anspruch 1, dadurch gekennzeichnet, daß die Zonen (23) zusätzlich wahlweise mit einem Bereich gegenüber dem Zwischenraum (6) erhöhten Drucks verbindbar sind.

3. Walze nach Anspruch 2, dadurch gekennzeichnet, daß die die Zonen (23) abteilenden Dichtungsglieder durch kolbenartige, in zur Achse des Querhaupts (3') senkrechten Zylindersackbohrungen (15) desselben verschiebbare Stempel (24,24',24") gebildet sind, daß in dem Querhaupt (3') mit dem auf der Seite des Bodens der Zylindersackbohrungen (15) gelegenen Zylinderraum (40) in Verbindung stehende Zuleitungen (26) vorgesehen sind, daß auf der an dem Innenumfang (4) der Hohlwalze (1) anliegenden stirnseitigen Stützfläche der Stempel (24,24', 24") mindestens eine gegen den Innenumfang (4) der Hohlwalze (1) offene, ringsum berandete hydrostatische Druckkammer (37,38,70,80) ausgebildet ist,

daß in dem Stempel (24,24',24") in die hydrostatische Druckkammer (37,38) mündende Drosselbohrungen (39) vorgesehen sind, über die die hydrostatische Druckkammer (37,38) mit Druckflüssigkeit füllbar ist,

und daß in dem Stempel (24,24',24") mindestens ein die hydrostatische Druckkammer (37,38,70,80) mit dem Zylinderraum (40) verbindender Kanal (41,67) vorgesehen ist, in dem ein gegen den Zylinderraum (40) hin öffnendes Rückschlagventil (43) angeordnet ist.

4. Walze nach Anspruch 3, dadurch gekennzeichnet, daß die Drosselbohrungen (39) mit dem Zylinderraum (40) in Verbindung stehen.

5. Walze nach Anspruch 3, dadurch gekennzeichnet, daß der Stempel (24') eine innere Kammer (60) aufweist, die über die Drosselbohrungen (39) mit der hydrostatischen Kammer (37, 38) und über eine die Verschiebungen des Stempels (24') in der Zylindersackbohrung (15) gestattende Leitungsanordnung (61, 63) mit einer von der Zuleitung (26) zu dem Zylinderraum (40) getrennten Zuleitung (66) im Querhaupt (3') in Verbindung steht.

6. Walze nach einem der Ansprüche 2 bis 5, dadurch gekennzeichnet, daß in der Stützfläche eine der hydrostatischen Druckkammer (37, 38) an dem in Umfangsrichtung gelegenen äußeren Rand (35) vorgelagerte Ableitkammer (70, 80) vorgesehen ist, die über ein gegen den Zylinderraum (40) hin öffnendes Rückschlagventil (43) mit dem Zylinderraum (40) verbunden ist.

7. Walze nach einem der Ansprüche 2 bis 6, dadurch gekennzeichnet, daß der Stempel (24") eine innere Kammer (90) aufweist, die über die Drosselbohrungen (39) mit der hydrostatischen Druckkammer (37, 38), über ein gegen die innere Kammer (90) hin öffnendes Rückschlagventil (74) mit dem Zylinderraum (40) und über ein gegen die innere Kammer (90) hin öffnendes Rückschlagventil (75) mit dem Zwischenraum (6) zwischen Querhaupt (3') und Hohlwalze (1) in Verbindung steht, ansonsten aber geschlossen ist, daßder Stempel (24") über den Querschnitt der Zylindersackbohrung (15) radial zur Achse der Bohrung (15) vorspringt und einen Überhang (78) bildet, durch den der Stempel (24") unter der Wirkung des in dem Zwischenraum (6) zwischen dem Querhaupt (3') und der Hohlwalze (1) herrschenden Drucks an den Innenumfang (4) der Hohlwalze (1) andrückbar ist und daß die hydrostatische Wirkfläche des Überhangs (78) der hydrostatischen Wirkfläche der durch die Drosselbohrungen (39) mit der inneren Kammer (90) verbundenen hydrostatischen Druckkammer (37,38) im Sinne einer hydraulischen Entlastung des Stempels (24") angepaßt ist.

8. Walze nach Anspruch 7, dadurch gekennzeichnet, daß der das Rückschlagventil (43) enthaltende Kanal (67) außerhalb der inneren Kammer (90) durch eine Drosselbohrung (76) mit dem Zylinderraum (40) verbunden ist.

9. Walze nach einem der Ansprüche 2 bis 8, dadurch gekennzeichnet, daß die Ableitkammer (80) die hydrostatische Druckkammer (37,38) ringförmig umgibt und die hydrostatische Druckkammer (37,38) durch einen ringförmigen stegartigen dichtenden Rand (35) von der Ableitkammer (80) getrennt ist.

10. Walze nach einem der Ansprüche 1 bis 9, dadurch gekennzeichnet, daß eine Reihe von Stempeln (14;24,24',24") auf der dem Walzspalt (31) zugewandten Seite des Querhaupts (3;3') vorgesehen ist.

11. Walze nach einem der Ansprüche 1 bis 10, dadurch gekennzeichnet, daß zusätzliche Elemente (19) vorgesehen sind, die Zonen mit einem gegenüber dem Druck des Zwischenraums (6) erhöhten Druck bilden.

## Claims

1. A roll with controllable line pressure, comprising a rotating hollow roll (1) constituting the working roll periphery and a stationary crosshead (3) extending longitudinally through the roll and leaving an annular space between it and the inner periphery (4) of the hollow roll (1), transverse end seals by means of which the gap (6) extending around the crosshead (3) between the hollow roll (1) and the crosshead (3) is axially sealable between the hollow roll (1) and the crosshead (3), a device for supplying pressure fluid at a controllable pressure to at least a part of the gap (6) bounded in the peripheral direction, and zones (13, 23) divided off from the part of the gap (6) by annular sealing elements (14, 24) disposed in the part of the gap (6) and abutting the inner periphery (4) of the hollow roll (1), feed ducts (16, 26) disposed in the crosshead (3) opening into the zones and a valve arrangement being inserted therein for connecting the zones (13, 23) to a region at a lower pressure than the part of the gap (6), characterised in that the entire gap (6) outside the zones (13, 23) can be supplied with pressure fluid at a uniform pressure everywhere.

2. A roll according to claim 1, characterised in that the zones (23) can also be optionally connected to a region at a higher pressure than the gap (6).

3. A roll according to claim 2, characterised in that the sealing elements dividing off the zones (23) are in the form of piston-like elements (24, 24', 24") movable in cylinder pocket bores (15) in the crosshead (3') and at right angles to the axis thereof, feed ducts (26) are provided in the crosshead (3') in connection with the cylinder space (40) on the side of the base of the cylinder pocket bores (15), at least one hydrostatic pressure chamber (37, 38, 70, 81) having a peripheral edge and open towards the inner periphery (4) of the hollow roll (1) is formed on the supporting area on the end face of the pistons (24, 24', 24") adjacent the inner periphery (4) of the hollow roll (1), choke bores (39) opening into the hydrostatic pressure chamber (37, 38) are provided in the piston (24, 24', 24") and are adapted to fill the hydrostatic pressure chamber (37, 38) with pressure fluid, and at least one channel (41, 47) connecting the hydrostatic pressure chamber (37, 38, 70, 80) to the cylinder space (40) is provided in the piston (24, 24', 24") and a non-return valve (43) opening towards the cylinder space (40) is disposed in the channel.

4. A roll according to claim 3, characterised in that the choke bores (39) are connected to the cylinder space (40).

5. A roll according to claim 3, characterised in that the piston (24') has an inner chamber (60) which is connected by the choke bores (39) to the hydrostatic chamber (37, 38) and, via a line arrangement (61, 63) for moving the piston (24') in the cylinder pocket bore (15), is connected to a feed duct (66) in the crosshead (3') separate from the feed duct (26) to the cylinder space (40).

6. A roll according to any of claims 2 to 5, characterised in that a drain chamber (70, 80) disposed in front of the hydrostatic pressure chamber (37, 38) at the outer edge (35) in the peripheral direction is provided in the supporting area and is connected to the cylinder space (40) via a non-return valve (43) which opens towards the cylinder space (40).

7. A roll according to any of claims 2 to 6, characterised in that the piston (24") has an inner chamber (90) connected by the choke bores (39) to the hydrostatic pressure chamber (37, 38), connected to the cylinder space (40) by a non-return valve (74) opening towards the inner chamber (90), and connected to the gap (6) between the crosshead (3') and the hollow roll (1) by a non-return valve (75) opening towards the inner chamber (90), but otherwise closed, the piston (24") projects radially over the cross-section of the cylinder pocket bore (15) towards the axis thereof and forms an overhang (78) via which the piston (24") can be pressed against the inner periphery (4) of the hollow roll (1) by the pressure prevailing in the gap (6) between the crosshead (3') and the hollow roll (1), and the hydrostatic effective surface area of the overhang (78) is adapted to the hydrostatic surface area of the hydrostatic pressure chamber (37, 38) connected by the choke bores (39) to the inner chamber (90), so as hydraulically to relieve the piston (24").

8. A roll according to claim 7, characterised in that the channel (67) containing the non-return valve (43) is connected to the cylinder space (40) by a choke bore (76) outside the inner chamber (90).

9. A roll according to any of claims 2 to 8, characterised in that the drain chamber (80) surrounds the hydrostatic pressure chamber (37, 38) in a ring and the hydrostatic pressure chamber (37, 38) is separated from the drain chamber (80) by an annular web-like sealing edge (35).

10. A roll according to any of claims 1 to 9, characterised in that a number of pistons (14; 24, 24', 24") are provided on the side of the crosshead (3, 3') facing the nip (31).

11. A roll according to any of claims 1 to 10, characterised in that additional elements (19) are provided and form zones at a pressure greater than the pressure of the gap (6).

## Revendications

1. Cylindre à pression linéaire réglable avec un cylindre creux tournant (1) formant l'enveloppe de cylindre de travail et une traverse (3) fixe laissant sur toute la longueur du cylindre creux (1) un écartement constant tout autour par rapport à l'enveloppe interne (4) du cylindre creux (1) avec des joints terminaux transversaux qui permettent de rendre étanche la chambre intermédiaire (6) qui s'étend autour de la traverse (3) entre le cylindre creux (1) et la traverse (3) en sens axial, avec un dispositif qui permet d'introduire un liquide de pression dans une partie délimitée en périphérie de la chambre intermédiaire (6) sous pression réglable avec des zones annulaires (13, 23) séparées par des éléments d'étanchéité (14, 24) placés sur la traverse (3) dans la partie de la chambre intermédiaire (6) et reposant contre l'enveloppe interne (4) du cylindre creux (1), vis-à-vis de la partie de chambre intermédiaire (6) dans lesquelles débouchent des conduites (16, 26) ménagées dans la traverse (3), dans lesquelles est branché un dispositif de soupapes au moyen duquel on relie les zones (13, 23) à un domaine de plus faible pression par rapport à la partie de la chambre intermédiaire (6), caractérisé en ce que l'on peut introduire dans toute la chambre intermédiaire (6), en dehors des zones (13, 23), un liquide sous pression, de pression partout identique.

2. Cylindre selon la revendication 1, caractérisé en ce que l'on peut relier, en plus à volonté, les zones (23) à un domaine qui est sous pression plus élevée par rapport à la chambre intermédiaire (6).

3. Cylindre selon la revendication 2, caractérisé en ce que les éléments d'étanchéité délimitant les zones (23) sont constitués par des empreintes coulissant (24, 24', 24″) dans des perçages borgnes cylindriques (15) perpendiculaires à l'axe de la traverse transversale (3'), que l'on prévoit des conduites (26) en liaison avec la chambre cylindrique (40) placée au fond des perçages borgnes cylindriques (15), qu'il y a au moins une chambre de pression hydrostatique (37, 38, 70, 80) ouverte et délimitée sur le pourtour par l'enveloppe interne (4) du cylindre creux (1) sur la surface d'appui frontale des empreintes (24, 24', 24″) s'appuyant sur l'enveloppe interne (4) du cylindre creux (1), que l'on prévoit des perçages (39) débouchant dans les chambres hydrostatiques (37, 38) dans les empreintes (24, 24', 24″) qui permettent de remplir la chambre hydrostatique (37, 38) en liquide de pression et que l'on prévoit au moins un canal de liaison (41, 67) reliant la chambre de pression hydrostatique (37, 38, 70, 80) à la chambre cylindrique (40) dans lequel on place un clapet de non-retour (43) s'ouvrant vers la chambre cylindrique (40).

4. Cylindre selon la revendication 3, caractérisé en ce que les perçages d'étranglement (39) sont en liaison avec la chambre cylindrique (40).

5. Cylindre selon la revendication 3, caractérisé en ce que l'empreinte (24') possède une chambre interne (60), qui est en liaison par les perçages d'étranglement (39) avec la chambre hydrostatique (37, 38) et par un agencement de conduites (61, 63), permettant les déplacements de l'empreinte (24') dans le perçage borgne cylindrique (15), avec une conduite (66) séparée de la conduite (26) d'alimentation de la chambre cylindrique (40) dans la traverse transversale (3').

6. Cylindre selon l'une des revendications 2 à 5, caractérisé en ce que l'on prévoit, dans la surface d'appui, une chambre de dérivation (70, 80) placée en avant de la chambre de pression hydrostatique (37, 38) dans le bord extérieur périphérique (35), qui est reliée à la chambre cylindrique (40) par l'intermédiaire d'un clapet de non-retour (43) s'ouvrant vers la chambre cylindrique (40).

7. Cylindre selon l'une des revendications 2 à 6, caractérisé en ce que l'empreinte (24″) présente une chambre interne (90) caractérisé en ce que l'empreinte (24″) possède une chambre interne (90) en liaison par les perçages (39) avec la chambre hydrostatique (37, 38) et par un clapet de non-retour (74) s'ouvrant vers la chambre interne (90) avec la chambre cylindrique (40) et par un clapet de non-retour (75) s'ouvrant vers la chambre interne (90) avec la chambre intermédiaire (6) comprise entre la traverse transversale (3') et le cylindre creux (1) mais qui, sinon, est fermé, que le piston (24″) présente par rapport à la section du perçage borgne cylindrique (15) une saillie radialement par rapport à l'axe du perçage (15) qui forme un rebord (78) grâce auquel l'empreinte (24″), sous l'action de la pression régnant dans la chambre intermédiaire (6) entre la traverse transversale (3') et le cylindre creux peut s'appuyer sur l'enveloppe interne (4) du cylindre creux (1) et que la surface efficace hydrostatique du rebord (78) est adaptée à la surface efficace hydrostatique de la chambre de pression (37, 38) hydrostatique reliée à la chambre interne (90) par les perçages (39) dans le sens d'une décharge hydraulique de l'empreinte (24″).

8. Cylindre selon la revendication 7, caractérisé en ce que le canal (67) comprenant le clapet de non-retour (43) à l'extérieur de la chambre interne (90) est relié à un orifice (76) à la chambre cylindrique (40).

9. Cylindre selon l'une des revendications 2 à 8, caractérisé en ce que la chambre de dérivation (80) entoure annulairement la chambre de pression hydrostatique (37, 38) et que la chambre de pression (37, 38) hydrostatique est séparée de la chambre de dérivation (80) par une arête (35) d'étanchéité annulaire de la chambre de dérivation (80).

10. Cylindre selon l'une des revendications 1 à 9, caractérisé en ce que l'on prévoit une série d'empreintes (14, 24, 24', 24″) sur la face de la traverse tournée vers l'écartement du cylindre (31).

11. Cylindre selon l'une des revendications 1 à 10, caractérisé en ce que l'on prévoit des éléments supplémentaires (19), qui forment des zones de pression supérieure à celle de la pression de la chambre intermédiaire (6).

Fig. 1

Fig. 3

Fig. 2

Fig. 4

Fig. 5

Fig. 7

Fig. 6

Fig. 8

Fig. 9

EP 0 273 185 B1

Fig. 10

Fig. 11

Fig. 12

EP 0 273 185 B1

Fig. 13

Fig. 14

Fig. 15

Fig.16

Fig.18

Fig.19

Fig.17